# EUROPEAN PATENT SPECIFICATION

(11) **EP 2 767 208 B1**
(45) Date of publication and mention of the grant of the patent: **25.05.2016**
(21) Application number: 12839994.6
(22) Date of filing: 03.10.2012
(51) Int. Cl.: A47L 15/42, G01N 21/53

(54) **DISHWASHER**
GESCHIRRSPÜLER
LAVE-VAISSELLE

(30) Priority: 12.10.2011 JP 2011224646
(43) Date of publication of application: 20.08.2014
(73) Proprietor: Panasonic Corporation, Osaka 571-8501 (JP)
(72) Inventor: NAKAYAMA, Kinya, Osaka 540-6207 (JP)
(74) Representative: Schwabe - Sandmair - Marx
(86) International application number: PCT/JP2012/006322
(87) International publication number: WO 2013/054489

(56) References cited:
- EP-A1- 0 058 576
- JP-A- H0 497 781
- JP-A- 2006 081 629
- US-A1- 2003 173 530
- US-A1- 2010 195 091

## Description

### TECHNICAL FIELD

The present invention relates to a dishwasher having a function of measuring turbidity of washing water.

### BACKGROUND ART

Conventionally, some types of machines such as a dishwasher have been on the market. Such a machine measures turbidity of washing water in a state where it is being used by the machine; senses the degree of soiling and/or its change to reduce rinsing time and rinse water for energy saving (refer to patent literature 1 for instance).

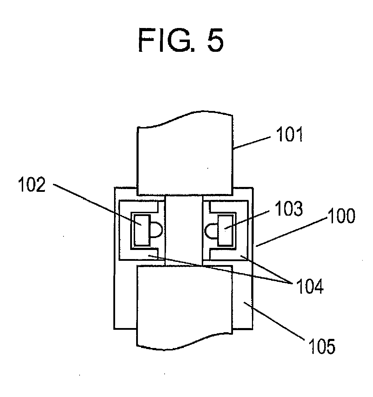

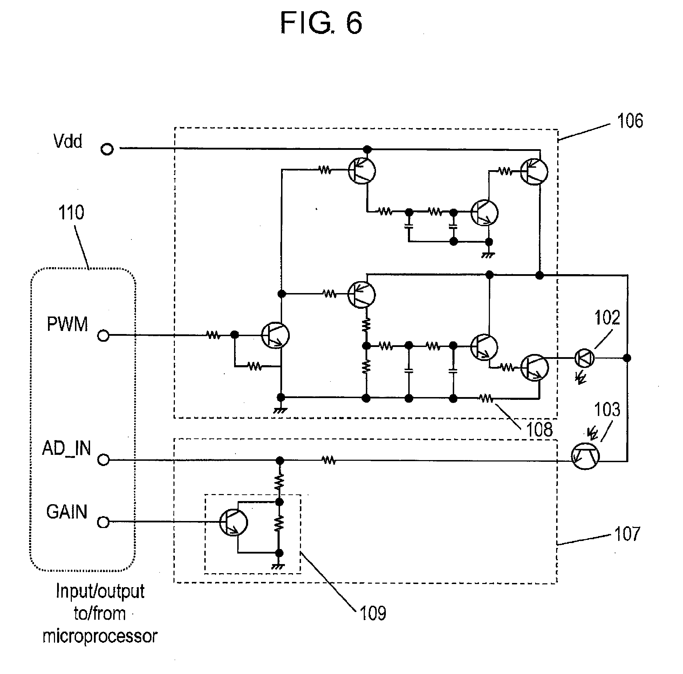

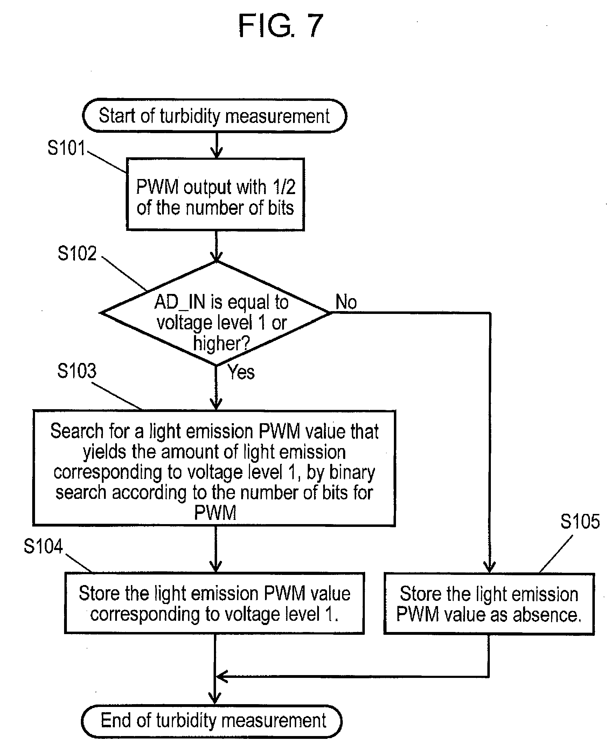

FIG. 5 illustrates an example of the structure of the turbidity sensor unit used in a conventional dishwasher. FIG. 6 is a circuit block diagram of the turbidity sensor unit. FIG. 7 is a flowchart showing major operation of the microprocessor device (hereinafter, referred to as a microprocessor) used in the conventional dishwasher. Hereinafter, a description is made of the structure and operation of the turbidity sensor unit of the conventional dishwasher.

As shown in FIG. 5, turbidity sensor unit 100 is composed of pipe 101 passing washing water therethrough; light emitting element 102 and light receiving element 103 placed facing each other and sandwiching pipe 101; fixing molded object 104 fixing the elements; circuit block 105 on which light emitting element 102 and light receiving element 103 are mounted. As shown in FIG. 6, circuit block 105 is composed of light emission control circuit 106 controlling the amount of light emission from light emitting element 102 according to output from microprocessor 110; and light receiving circuit 107 that obtains a current from light receiving element 103 and convert the current to a value of voltage input to microprocessor 110. Turbidity of washing water is measured as follows. That is, light emitting element 102 is made emit light; light receiving element 103 receives light that has been transmitted through washing water flowing through pipe 101; and light receiving circuit 107 converts the value of a current flowing through light receiving element 103 to a voltage value.

FIG. 7 shows the operation flow of microprocessor 110 when turbidity sensor unit 100 senses turbidity of washing water. First, turbidity of feed water (makeup water) before washing is measured. Microprocessor 110 PWM-controls (pulse-width modulation control) the amount of light emission from light emitting element 102 with 1/2 of the number of bits representing the amount of light emission (step S101). Then, decision is made whether converted voltage value (AD_IN) obtained from light receiving element 103 to the amount of light emission from light emitting element 102 is equal to predetermined voltage level 1 or higher (step S102). When the converted voltage value is equal to voltage level 1 or higher (Yes), microprocessor 110 searches for a PWM output value (hereinafter, referred to as a light emission PWM value) that yields the amount of light emission corresponding to voltage level 1 while controlling the PWM output, by binary search according to the number of bits for PWM (step S103). Subsequently, microprocessor 110 makes the memory (not shown) store the light emission PWM value that yields voltage level 1 (step S104). Meanwhile, in step S102, when the converted voltage value is lower than voltage level 1 (No), microprocessor 110 makes the memory store the light emission PWM value as absence. Next, in the same way as for feed water, the control of steps from S101 to S105 is repeated for washing water to determine a light emission PWM value that yields the amount of light emission corresponding to voltage level 1. Finally, the difference between the light emission PWM value for washing water and that for feed water is determined as the value of turbidity.

Thus in the conventional structure, light emission control circuit 106 variably controls a current flowing through light emitting element 102 correspondingly to PWM output from microprocessor 110. However, the maximum current value that light emitting element 102 can pass is a current value determined by the resistance value of limiting resistor 108 when PWM output from microprocessor 110 reaches maximum voltage value Vdd. Although the current value passing through light emitting element 102 changes according to the resolution for PWM control, the maximum current value is determined by the resistance value of limiting resistor 108, and thus turbidity that can be sensed is subjected to some restrictions.

Hence in the conventional circuit, light receiving circuit 7 is provided with measurement gain adjusting unit 109 that allows the load resistance value of light receiving circuit 7 to be changed by output from microprocessor 110. When the turbidity of washing water increases to reduce the amount of light that is transmitted through washing water flowing through pipe 101 and thus a current received by light receiving element 103, measurement gain adjusting unit 109 changes the load resistance value to expand the measurement range. In the meantime, turbidity sensor unit 100 involves a lot of variation such as variation in the amount of light emission from light emitting element 102 mounted, variation in the sensitivity of light receiving element 103, variation in the amount of light emission due to the angle of mounting light emitting element 102 to fixing molded object 104, variation in the amount of light reception due to the angle of mounting light receiving element 103 to fixing molded object 104, and variation in the transparency of pipe 101. Hence, even if the measurement range is expanded, above-described various types of variation, besides current restriction at light emitting element 102, leaves a very thin margin for the variation when decision is made only by voltage level 1 that is compared with a converted voltage value as shown in FIG. 7. Accordingly, a large variation for instance results in an unavailable light emission PWM value that matches predetermined voltage level 1, sometimes disabling turbidity measurement. To solve this problem, more strict selecting conditions are imposed on the elements and parts and higher installation accuracy is required.

Light receiving circuit 107 needs to be provided with measurement gain adjusting unit 109, which causes the structure at the side of microprocessor 110 supporting the unit to be complicated and expensive.
US-2010/195091 A1 relates to a sensor device and method for detecting the turbidity of wash liquor. The sensor device includes an optical transmitter; an optical receiver, wherein the wash liquor to be tested flows between the transmitter and the receiver; and an electronic control and evaluation device to (a) carry out a reference measurement by means of the optical transmitter and receiver in order to determine a reference measured value; (b) carry out a turbidity measurement on the wash liquor to be measured by means of the optical transmitter and receiver in order to determine a test measured value; (c) relate the reference measured value to the test measured value; and (d) determine a characteristic value for a determined turbidity of the wash liquor therefrom and transmit the characteristic value as a measurement signal. The determination of the reference measured value and the test measured value include determining a gradient of the turbidity.

### Citation List

### Patent Literature

PTL 1: Japanese Patent Unexamined Publication No. 2006-68234
PTL 2: US-2010/195091 A1

### SUMMARY OF THE INVENTION

The invention is defined by the subject-matter of independent claim 1. The dependent claims are directed to advantageous embodiments.

### ADVANTAGES OF THE INVENTION

Advantageously, a dishwasher includes a washing tub that accommodates wash objects such as tableware; a washing unit that circulates washing water inside the washing tub through a washing water circulation path and washes the wash objects with the washing water; a turbidity sensor unit that measures turbidity of the washing water inside the washing water circulation path; and a control unit that controls operation of the turbidity sensor unit according to input from the turbidity sensor unit. The turbidity sensor unit has a light emitting element and a light receiving element placed facing each other and sandwiching a given part of the washing water circulation path; a light emission control circuit that current-controls the amount of light emission from the light emitting element according to PWM output from the control unit; a light receiving circuit that inputs a converted voltage value obtained by converting a current passing through the light receiving element to voltage, to the control unit. The control unit compares the converted voltage value with a reference value and controls PWM output to sense turbidity of the washing water from a PWM output value at which the converted voltage value matches the reference value. The control unit has a plurality of voltage levels that are reference values to be compared with a converted voltage value.

For the reduction of the amounts of light emission and light reception due to variation in the respective elements and parts and in their mounting, this structure allows the light emission current value of the light emitting element to be set with a sufficient margin, thereby enabling more stable and reliable measurement of turbidity.

Further, for variation in the transparency of a resin forming the pipe of the washing water circulation path and for the reduction of the amount of light reception due to foreign matter deposited to the pipe, aging, and other causes, a low decision level preliminarily provided allows turbidity in such states to be measured.

### BRIEF DESCRIPTION OF DRAWINGS

FIG. 1 is a sectional side view of a dishwasher according to a first exemplary embodiment of the present invention.
FIG. 2A is a planar block diagram of the turbidity sensor unit of the dishwasher according to the first exemplary embodiment of the present invention.
FIG. 2B is a side block diagram of the turbidity sensor unit of the dishwasher according to the first exemplary embodiment of the present invention.
FIG. 2C is a sectional view of FIG. 2A taken along the line 2C-2C.
FIG. 3 is a circuit block diagram of the turbidity sensor unit of the dishwasher according to the first exemplary embodiment of the present invention.
FIG. 4 is a flowchart showing major operation of the microprocessor used in the dishwasher according to the first exemplary embodiment of the present invention.
FIG. 5 illustrates the structure of the turbidity sensor unit of a conventional dishwasher.
FIG. 6 is a circuit block diagram of the turbidity sensor unit of the conventional dishwasher.
FIG. 7 is a flowchart showing major operation of the microprocessor used in the conventional dishwasher.

### DESCRIPTION OF EMBODIMENTS

Hereinafter, a description is made of an exemplary embodiment of the present invention with reference to the related drawings. The exemplary embodiment does not limit the scope of the present invention.

### FIRST EXEMPLARY EMBODIMENT

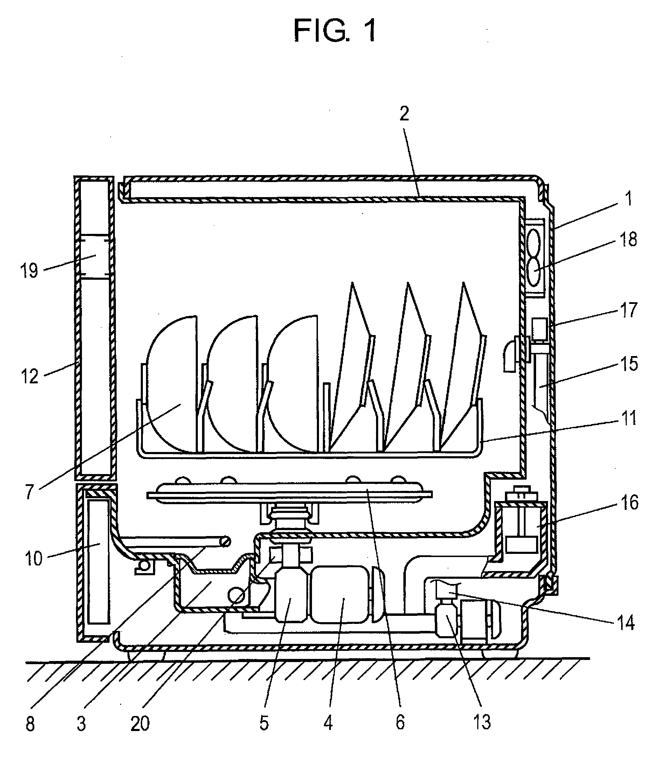

FIG. 1 is a sectional side view of a dishwasher according to an exemplary embodiment of the present invention. A simple description is made of dishwasher 1 according to the exemplary embodiment in reference to FIG. 1.

Dishwasher 1 is provided therein with washing tub 2 accommodating to-be-washed tableware (wash objects) 7. Washing tub 2 is provided therein with dish basket 11 on which tableware 7 is placed; washing nozzle 6 spraying water toward tableware 7 placed on dish basket 11; washing pump 5 pressure-feeding the washing water to washing nozzle 6; and heater 8 heating the washing water and air inside washing tub 2. One end of the washing water circulation path is connected to washing nozzle 6; the other end of the washing water circulation path is connected to drain opening 3 provided in the bottom of washing tub 2. Washing pump 5 is driven by washing motor 4. Washing pump 5 is placed halfway through the washing water circulation path; circulates the washing water sprayed from washing nozzle 6 through drain opening 3 and the washing water circulation path; and again feeds the water to washing nozzle 6. These components such as washing nozzle 6, washing pump 5, the washing water circulation path compose the washing unit.

Washing tub 2 is open to the front, and its front surface has lid 12 freely opened and closed attached thereto. Drain pump 13 suctions the washing water from drain opening 3 and drains the washing water outside the dishwasher through drain hose 14.

The washing water stored inside washing tub 2 is fed from water feed unit 15. When water level sensor 16 communicatively connected with washing tub 2 senses that the washing water has reached a given water level, microprocessor 10 as a control unit closes water feed valve 17 to stop feeding the washing water.

Blowing fan 18 for drying sends outside air to the inside of washing tub 2 to discharge vapor generated from surfaces of tableware 7 and other parts to the outside of washing tub 2 through air outlet 19 provided in lid 12, thereby drying tableware 7.

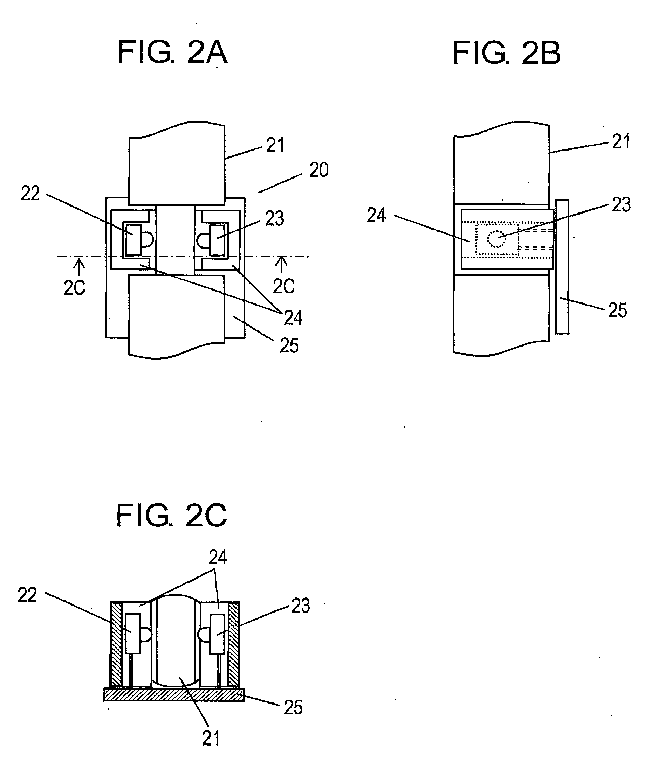

Turbidity sensor unit 20 sensing turbidity of the washing water is provided on the washing water circulation path. FIG. 2A is a planar block diagram of a turbidity sensor unit used in a dishwasher according to the first exemplary embodiment of the present invention. FIG. 2B is a side block diagram of the turbidity sensor unit of the dishwasher. FIG. 2C is a sectional view of FIG. 2A taken along the line 2C-2C.

As shown in FIGs. 2A through 2C, turbidity sensor unit 20 is composed of pipe 21 conducting the washing water therethrough; light emitting element 22 and light receiving element 23 facing each other and sandwiching pipe 21; fixing molded object 24 fixing the elements; and circuit block 25 on which light emitting element 22 and light receiving element 23 are mounted. Turbidity sensor unit 20 makes light emitting element 22 emit light and measures the amount of light transmitted through the washing water passing through the inside of pipe 21 between light emitting element 22 and light receiving element 23 and received by light receiving element 23. This determines the light transmittance of the washing water, namely the degree of soiling (turbidity) and/or its change.

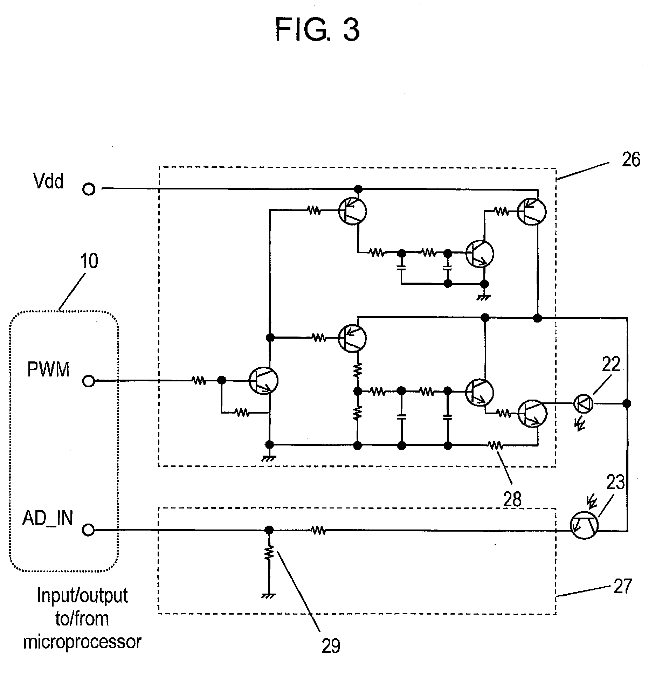

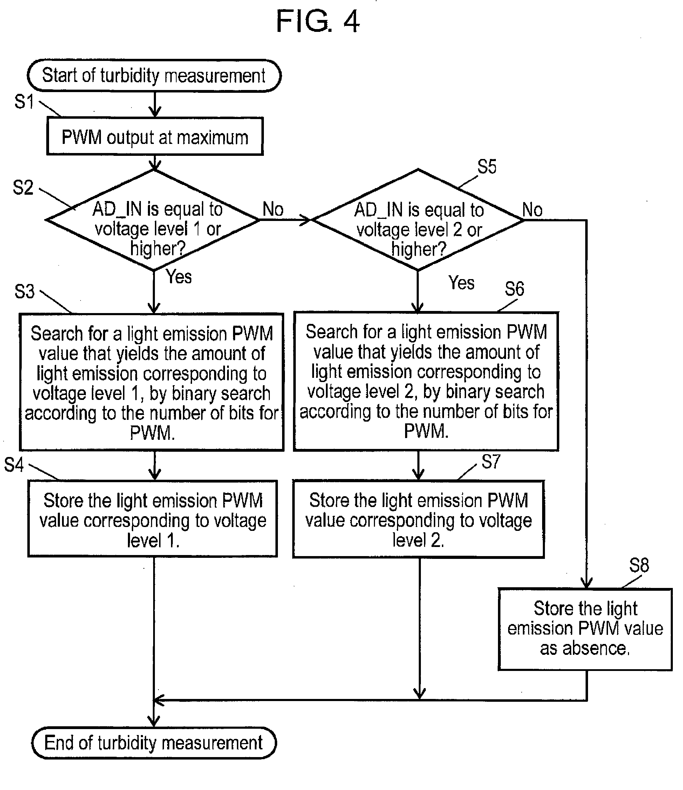

FIG. 3 is a circuit block diagram of the turbidity sensor unit of a dishwasher according to the first exemplary embodiment of the present invention. FIG. 4 is a flowchart showing major operation of the microprocessor used in the dishwasher according to the first exemplary embodiment of the present invention.

In FIG. 3, the maximum current value of light emitting element 22 is determined by the resistance value of limiting resistor 28 in light emission control circuit 26. The other part of light emission control circuit 26 is a circuit that controls a current by which light emitting element 22 emits light according to PWM output from microprocessor 10. Light receiving circuit 27 converts a current flowing through light receiving element 23 when receiving light, to voltage using load resistor 29. Then, the resultant voltage value is input to microprocessor 10 as a converted voltage value (AD_IN).

A description is made of operation and effects of turbidity sensor unit 20 of dishwasher 1 structured as above.

As shown in FIG. 4, to measure turbidity of the washing water, microprocessor 10 as a control unit first passes a current of a maximum value determined by the resistance value of limiting resistor 28, through light emitting element 22 (maximizes PWM output) to make light emitting element 22 emit light (step S1). At this moment, a current flows through light receiving element 23. Microprocessor 10 acquires a converted voltage value obtained by voltage-converting a current flowing through light receiving element 23. Microprocessor 10 has some predetermined voltage levels, which are referred to as voltage level 1 and voltage level 2 in the descending order starting from the largest one. In this exemplary embodiment, a description is made of a case where microprocessor 10 has two voltage levels: 1 and 2; microprocessor 10 may have three or more voltage levels.

Microprocessor 10 determines whether the converted voltage value (AD_IN) obtained when light emitting element 22 emits light at a maximum current is larger or not than predetermined voltage level 1 (step S2). If larger (Yes), microprocessor 10 searches for a light emission PWM value that yields the amount of light emission corresponding to voltage level 1 while changing the PWM output, by binary search according to the number of bits for PWM (step S3). Subsequently, microprocessor 10 makes a memory (not shown) store the light emission PWM value (step S4).

Meanwhile, in step S2, if the converted voltage value (AD_IN) is smaller than voltage level 1 (No), microprocessor 10 compares the converted voltage value with voltage level 2 (next lower than voltage level 1) to determine whether it is equal to voltage level 2 or higher (step S5). If equal to or higher (Yes), microprocessor 110 searches for a light emission PWM value that yields the amount of light emission corresponding to voltage level 2 while changing the PWM output, by binary search according to the number of bits for PWM (step S6). Subsequently, microprocessor 10 makes the memory store the light emission PWM value (step S7).

Meanwhile, in step S5, if the converted voltage value (AD_IN) is smaller than voltage level 2 (No), microprocessor 10 makes the memory store the light emission PWM value as absence (step S8).

As described above, microprocessor 10 in dishwasher 1 of this exemplary embodiment has a plurality of voltage levels (not a single) to compare with a converted voltage value. Then, microprocessor 10 compares a converted voltage value obtained by converting a current of light received by light receiving element 23 in a state where light emitting element 22 is emitting light at a maximum current value, successively in the descending order starting from the largest one, and determines a light emission PWM value according to the voltage level by binary search.

In this way, microprocessor 10 having a plurality of voltage levels to be compared with a converted voltage value reliably determines a light emission PWM value even for the reduction of the amounts of light emission and light reception due to variation in the performance of the respective elements and parts and in their mounting accuracy. Consequently, turbidity of the washing water is measured stably and accurately even for cases such as a small light amount due to variation in the amount of light emission caused by variation in the angle of mounting light emitting element 22 to fixing molded object 24; for a low sensitivity due to variation in the amount of light reception caused by variation in the angle of mounting light receiving element 23 to fixing molded object 24; and for a small transmission amount due to variation in the transparency degree of the pipe.

For variation in the transparency of resin forming pipe 21 of the washing water circulation path and for the reduction of the amount of light reception due to foreign matter deposited to the pipe, aging, and other causes, a low decision level preliminarily provided allows turbidity in such states to be measured.

Light receiving circuit 27 can be formed without the need for a measurement gain adjusting unit, and thus the structure at the side of microprocessor 10 supporting the measurement gain adjusting unit can be simplified, thereby providing a dishwasher including a turbidity sensor unit relatively at low cost.

Microprocessor 10 controls the amount of light emission from light emitting element 22 by controlling PWM output so that a converted voltage value matches the highest voltage level among a plurality of voltage levels that does not exceed the converted voltage value. Thus, for the reduction of the amounts of light emission and light reception due to variation in the respective elements and parts and in their mounting, turbidity of the washing water is measured more stably and accurately by selecting the highest possible voltage level as a comparative reference value among a plurality of voltage levels preliminarily set.

Further, microprocessor 10 determines a light emission PWM value in the following way. That is, microprocessor 10 makes light emitting element 22 emit light at a maximum current value, and then compares a converted voltage value extracted from light receiving circuit 27 with a plurality of voltage levels successively in the descending order starting from the highest one; only when the converted voltage value is equal to or higher than a certain voltage level preliminarily set, microprocessor 10 searches for a light emission PWM value corresponding to the voltage level preliminarily set while changing the PWM output, by binary search. This allows the light emission PWM value to be efficiently set to an optimum value, thereby measuring turbidity of the washing water stably and accurately.

As described hereinbefore, a dishwasher of the present invention includes a washing tub that accommodates wash objects such as tableware; a washing unit that circulates washing water inside the washing tub through a washing water circulation path and washes the wash objects with the washing water; a turbidity sensor unit that senses turbidity of the washing water inside the washing water circulation path; and a control unit that controls operation of the turbidity sensor unit according to input from the turbidity sensor unit. The turbidity sensor unit has a light emitting element and a light receiving element placed facing each other and sandwiching a given part of the washing water circulation path; a light emission control circuit that controls the amount of light emission from the light emitting element according to PWM output from the control unit; a light receiving circuit that inputs a converted voltage value obtained by converting a current passing through the light receiving element, to the control unit. The control unit compares the converted voltage value with a reference value and controls PWM output to sense turbidity of the washing water from a PWM output value at which the converted voltage value matches the reference value. The control unit has a plurality of voltage levels that are reference values to be compared with the converted voltage value.

For the reduction of the amounts of light emission and light reception due to variation in the respective elements and parts and in their mounting, this structure lowers the voltage level as a comparative reference value preliminarily set, used for determination. Accordingly, even if the light receiving element receives a small current, turbidity of the washing water is measured stably and accurately.

In the dishwasher of the present invention, the control unit controls the PWM output so that a converted voltage value matches a highest voltage level that does not exceed the converted voltage value among the plurality of voltage levels.

Thus, for the reduction of the amounts of light emission and light reception due to variation in the respective elements and parts and in their mounting, the highest possible voltage level can be selected as a comparative reference value among the plurality of voltage preliminarily set, thereby measuring turbidity of the washing water more stably and accurately.

In the dishwasher of the present invention, after making the light emitting element emit light at a maximum current value, the control unit compares a converted voltage value with each of the plurality of voltage levels in the descending order starting from the highest one.

Herewith, to measure turbidity, the control unit first makes the light emitting element emit light at a maximum current value, and then compares a converted voltage value obtained by voltage-converting a current received by the light receiving element with voltage levels preliminarily set successively in the descending order starting from the highest one. Then, only when the converted voltage value is equal to or higher than a level preliminarily set, the control unit subsequently searches for a light emission PWM value that corresponds to the level preliminarily set while changing the PWM output, by binary search. Consequently, the light emission PWM value can be efficiently set to an optimum value, thereby measuring turbidity of the washing water stably and accurately.

### INDUSTRIAL APPLICABILITY

As described above, a dishwasher according to the present invention absorbs variation in light emission and light reception of the turbidity sensor and in its mounting, which allows measuring turbidity of the washing water stably and accurately, and thus provides a dishwasher including a turbidity sensor unit relatively at low cost.

### REFERENCE MARKS IN THE DRWAINGS

- 1: Dishwasher
- 2: Washing tub
- 5: Washing pump
- 6: Washing nozzle
- 10, 110: Microprocessor (control unit)
- 20, 100: Turbidity sensor unit
- 21, 101: Pipe
- 22, 102: Light emitting element
- 23, 103: Light receiving element
- 26, 106: Light emission control circuit
- 27, 107: Light receiving circuit
- 28, 108: Limiting resistor
- 29: Load resistor

## Claims

1. A dishwasher (1) comprising:
a washing tub (2) that accommodates wash objects such as tableware (7);
a washing unit (5) that circulates washing water inside the washing tub (2) through a washing water circulation path and washes the wash objects with the washing water;
a turbidity sensor unit (20) that measures turbidity of the washing water inside the washing water circulation path; and
a control unit (10) that controls operation of the turbidity sensor unit (20) according to input from the turbidity sensor unit (20),
wherein the turbidity sensor unit (20) comprises:
a light emitting element (22) and a light receiving element (23) placed facing each other and sandwiching a given part of the washing water circulation path;
a light emission control circuit (26) that controls an amount of light emission from the light emitting element (22) according to PWM output from the control unit (10); and
a light receiving circuit (27) that inputs a converted voltage value (AD_IN) obtained by converting a current passing through the light receiving element (23), to the control unit (10),
**characterized in that**:
the control unit (10) has a plurality of predetermined voltage reference values to be compared with the converted voltage value (AD_IN) of the light receiving circuit (27),
the control unit (10) comparing the converted voltage value (AD_IN) with a value of the plurality of predetermined voltage reference values and setting the PWM output to sense the turbidity of the washing water to a PWM output value at which the converted voltage value (AD_IN) matches the predetermined voltage reference value.

2. The dishwasher (1) according to claim 1, wherein the control unit (10) controls the PWM output so that the converted voltage value (AD_IN) matches a highest voltage level that does not exceed the converted voltage value (AD_IN) among the plurality of predetermined voltage reference values.

3. The dishwasher (1) according to claim 1 or 2, wherein the control unit (10) makes the light emitting element (22) emit light at a maximum current value, and then compares. the converted voltage value (AD_IN) with each of the plurality of predetermined voltage reference values in a descending order starting from the highest one.

## Patentansprüche

1. Geschirrspülmaschine (1), die Folgendes umfasst:
eine Spülwanne (2), die Spülobjekte wie Geschirr (7) aufnimmt;
eine Spüleinheit (5), die Spülwasser in der Spülwanne (2) durch einen Spülwasserumwälzweg umwälzt und die Spülobjekte mit dem Spülwasser spült;
eine Trübungssensoreinheit (20), die die Trübung des Spülwassers in dem Spülwasserumwälzweg misst; und
eine Steuereinheit (10), die den Betrieb der Trübungssensoreinheit (20) entsprechend der Eingabe von der Trübungssensoreinheit (20) steuert,
wobei die Trübungssensoreinheit (20) Folgendes umfasst:
ein lichtemittierendes Element (22) und ein lichtempfangendes Element (23), die einander gegenüber positioniert sind und einen vorgegebenen Teil des Spülwasserumwälzwegs einschließen;
eine Lichtemissionssteuerschaltung (26), die eine Menge der Lichtemission von dem lichtemittierenden Element (22) entsprechend der PWM-Ausgabe der Steuereinheit (10) steuert; und
eine Lichtempfangsschaltung (27), die einen umgesetzten Spannungswert (AD_IN) in die Steuereinheit (10) eingibt, der durch das Umsetzen eines Stroms, der das lichtempfangende Element (23) durchläuft, gewonnen wird,
**dadurch gekennzeichnet, dass**:
die Steuereinheit (10) mehrere vorbestimmte Spannungsreferenzwerte aufweist, die mit dem umgesetzten Spannungswert (AD_IN) der Lichtempfangsschaltung (27) verglichen werden müssen,
die Steuereinheit (10), die den umgesetzten Spannungswert (AD_IN) mit einem Wert der mehreren vorbestimmten Spannungsreferenzwerten vergleicht und die PWM-Ausgabe, um die Trübung des Spülwassers zu erfassen, auf einen PWM-Ausgabewert einstellt, bei dem der umgesetzte Spannungswert (AD_IN) mit dem vorbestimmten Spannungsreferenzwert übereinstimmt.

2. Geschirrspülmaschine (1) nach Anspruch 1, wobei die Steuereinheit (10) die PWM-Ausgabe derart steuert, dass der umgesetzte Spannungswert (AD_IN) unter den mehreren vorbestimmten Spannungsreferenzwerten, mit dem höchsten Spannungspegel, der den umgesetzten Spannungswert (AD_IN) nicht überschreitet, übereinstimmt.

3. Geschirrspülmaschine (1) nach Anspruch 1 oder 2, wobei die Steuereinheit (10) das lichtemittierende Element (22) dazu veranlasst, Licht bei einem maximalen Stromwert zu emittieren, und anschließend den umgesetzten Spannungswert (AD_IN) in einer absteigenden Reihenfolge, beginnend mit dem höchsten Wert, mit jedem der mehreren vorbestimmten Spannungsreferenzwerten vergleicht.

## Revendications

1. Lave-vaisselle (1) comportant :
une cuve de lavage (2) qui reçoit un objet à laver tel que de la vaisselle (7) ;
une unité de lavage (5) qui fait circuler de l'eau de lavage à l'intérieur de la cuve de lavage (2) via un chemin de circulation d'eau de lavage et lave les objets à laver à l'aide de l'eau de lavage ;
une unité de capteur de turbidité (20) qui mesure la turbidité de l'eau de lavage à l'intérieur du chemin de circulation d'eau de lavage ; et
une unité de commande (10) qui commande le fonctionnement de l'unité de capteur de turbidité (20) en fonction d'une entrée provenant de l'unité de capteur de turbidité (20),
où l'unité de capteur de turbidité (20) comporte :
un élément d'émission de lumière (22) et un élément de réception de lumière (23) disposés face à face et prenant en sandwich une partie donnée du chemin de circulation d'eau de lavage ;
un circuit de commande d'émission de lumière (26) qui commande une quantité de lumière émise par l'élément d'émission de lumière (22) en fonction de la sortie MLI provenant de l'unité de commande (10) ; et
un circuit de réception de lumière (27) qui entre une valeur de tension convertie (AD_IN), obtenue par conversion d'un courant passant à travers l'élément de réception de lumière (23), dans l'unité de commande (10),
**caractérisé en ce que** :
l'unité de commande (10) comporte une pluralité de valeurs de tension de référence prédéterminées à comparer avec la valeur de tension convertie (AD_IN) du circuit de réception de lumière (27),
l'unité de commande (10) comparant la valeur de tension convertie (AD_IN) avec une valeur parmi la pluralité de valeurs de tension de référence prédéterminées et réglant la sortie MLI pour détecter la turbidité de l'eau de lavage à une valeur de sortie MLI à laquelle la valeur de tension convertie (AD_IN) correspond à la valeur de référence de tension prédéterminée.

2. Lave-vaisselle (1) selon la revendication 1, où l'unité de commande (10) commande la sortie MLI de telle manière que la valeur de tension convertie (AD_IN) correspond à un niveau de tension maximal parmi la pluralité de valeurs de tension de référence prédéterminées qui ne dépasse pas la valeur de tension convertie (AD_IN).

3. Lave-vaisselle (1) selon la revendication 1 ou 2, où l'unité de commande (10) commande à l'élément d'émission de lumière (22) d'émettre de la lumière à une valeur de courant maximale, puis compare la valeur de tension convertie (AD_IN) avec chacune des valeurs de la pluralité de valeurs de tension de référence prédéterminées dans un ordre descendant en partant de la plus élevée.
